Europäisches Patentamt

European Patent Office

Office européen des brevets

(19)

(11)    **EP 1 185 822 B1**

(12)                **EUROPEAN PATENT SPECIFICATION**

(45) Date of publication and mention
    of the grant of the patent:
    **09.02.2005   Bulletin 2005/06**

(51) Int Cl.⁷: **F21V 8/00**

(21) Application number: **00940752.9**

(86) International application number:
    **PCT/IT2000/000241**

(22) Date of filing: **12.06.2000**

(87) International publication number:
    **WO 2000/077447 (21.12.2000 Gazette 2000/51)**

(54) **CONTINUOUS EXTENDED OPTICAL SOURCES AND RECEIVERS AND OPTICAL BARRIERS USING SAID SOURCES AND SAID RECEIVERS**

KONTINUIERLICH VERLÄNGERTE OPTISCHE QUELLEN UND EMPFÄNGER UND OPTISCHE BARRIERE MIT SOLCHEN QUELLEN UND EMPFÄNGER

SOURCES ET RECEPTEURS OPTIQUES ETENDUS ET CONTINUS, ET BARRIERES OPTIQUES LES UTILISANT

(84) Designated Contracting States:
    **AT BE CH CY DE DK ES FI FR GB GR IE IT LI LU MC NL PT SE**

(30) Priority: **15.06.1999  IT  FI990142**

(43) Date of publication of application:
    **13.03.2002   Bulletin 2002/11**

(73) Proprietors:
    • **Masotti, Leonardo**
      **50019 Sesto Fiorentino (IT)**
    • **Pacini, Paolo**
      **50139 Firenze (IT)**

(72) Inventors:
    • **Masotti, Leonardo**
      **50019 Sesto Fiorentino (IT)**
    • **Pacini, Paolo**
      **50139 Firenze (IT)**

(74) Representative:
    **Mannucci, Gianfranco, Dott.-Ing. et al**
    **Ufficio Tecnico Ing. A. Mannucci**
    **Via della Scala 4**
    **50123 Firenze (IT)**

(56) References cited:
    **EP-A- 0 103 729          EP-A- 0 333 203**
    **EP-A- 0 800 036          WO-A-98/20279**
    **FR-A- 2 591 717          IT-B- 1 291 835**

## Description

The present invention relates to a method of making extended sources of electromagnetic radiation, particutariy in the visible and infrared range, and corresponding optical receivers, particularly for making optical anti-intrusion barriers for the monitoring of controlled areas and the like.

Prior art

Italian patent No. 1,291,835 describes a two-dimensional optical barrier of the light guide type which is particularly useful for the monitoring of small controlled areas, for example the area of access to the working space of a machine tool, for the purpose of stopping or disabling the operation of the machine tool when a foreign body, for example part of the operator's body, is found within the working space. This optical barrier uses a tubular lamp as the light source. However, although this has more advantages than barriers made with single pairs of source emitters and receivers of the single point type, it has certain limitations in terms of the size and shape of the light source and consequently of the barrier and therefore also of the controllable area.

Furthermore, the wavelength which can be used is determined by the nature of the available lamps which have a tubular shape suitable for the specific application.

WO-A-9 820 279 discloses light illuminating rods having a light source of one end and a light reflective film applied to the outer periphery of the rod.

Objects of the invention

A first object of the present invention is the provision of a continuous extended optical source which makes it possible to generate in an efficient way an optical beam having an extended geometry, for example in order to make control and anti-intrusion barriers having a long linear development and a shape which is not necessarily rectilinear, or in order to make lighting devices which provide special optical effects.

A second object of the present invention is the provision of an optical receiver capable of receiving an optical beam having an extended geometry, for example in order to make, in combination with a similar optical source, an anti-intrusion barrier having a long linear development and any shape.

A further object of the present invention is the provision of a continuous two-dimensional optical barrier of the light guide type which has an optical source and an optical receiver which are essentially linear, which can extend over considerable lengths and which can have a configuration which is not necessarily rectilinear. In particular, one object of the present invention is the provision of barriers of this type which can be used not only as anti-intrusion barriers, but also as systems for measuring the shapes and/or sizes of objects.

The object of the invention is also the provision of optical sources and optical receivers which can, if necessary, emit and receive beams having geometries extended in a plurality of directions, for making a controlled perimeter with a limited number of sources and receivers.

A further object of the present invention is the provision of an optical barrier which can make use of infrared rather than visible radiation.

Summary of the invention

These and further objects and advantages, which will be evident from the following text to those skilled in the art, are essentially achieved with an extended optical receiver according to claim 1 and with an extended optical anti-intrusion barrier according to claim 11. Said barrier includes an extended optical source comprising: an elongate bar with one lateral surface and two end surfaces; at least one optical emitter, arranged in front of at least one of said end surfaces in such a way that it emits an optical beam towards the end surface; and at least one diffusing strip along the longitudinal development of the bar on the lateral surface thereof. The bar is made from material which is optically transparent to the emission wavelength of the optical emitter. This can be a light-emitting diode (LED), which emits at a visible wavelength or at a non-visible wavelength, for example in the near infrared. With an LED or a series of LEDs arranged on one or both end surfaces of the bar, it is possible to obtain light beams having any extension, corresponding to the development of the diffusing strip formed along the lateral surface of the bar.

According to another aspect of the invention, an extended optical receiver is provided, comprising an elongate bar with a lateral surface and two end surfaces; at least one optical sensor arranged in front of at least one of the end surfaces, in such a way as to receive an optical beam guided along said bar toward said end surface; and at least one diffusing strip along the longitudinal development of the bar, on the lateral surface thereof. In this case also, the bar is made from a material which is optical transparent to the reception wavelength of the optical sensor, which will correspond to the emission wavelength of the source.

When the source and the receiver are designed to interact to form an optical barrier, the two bars forming the receiver and the source have essentially the same development.

The bars can generally be of any shape, not necessarily rectilinear. Typically, their cross section will be constant to provide the same optical behavior along the whole of the longitudinal development. In a possible embodiment, they are cylindrical, and are possibly, but not necessarily, of circular section. However, it is also possible to make bars which are curved, wavy or of other shape, according to the type of volume which is to be controlled.

In a possible embodiment, the diffusing strip on the lateral surface of the bar of the source and/or of the receiver may consist of a ground area of the lateral surface. In a preferred embodiment, however, the diffusing strip consists of a strip of diffusing and reflective material which is opaque to the radiation of the optical emitter, applied to the exterior of the lateral surface of the bar of the source and/or of the receiver. The strip can consist, for example, of an opaque white paint.

The optical source made according to the invention can make use of an emitter or a set of emitters applied to only one of the ends of the bar, while a reflective surface is applied to the other end. Conversely, it is possible to place emitters at both ends of the bar. In a reciprocal way, it is possible to provide one or more optical sensors at one of the ends of the bar in the receiver, while the other end is provided with a reflective surface. However, it is preferable to place the sensors at both ends of the bar, since this enables a stronger signal to be obtained in case of intrusion.

The intrusion of a foreign body through the barrier formed by the optical source and receiver is detected, as in the prior art, by a reduction of the signal detected by the optical sensor. Further details on the method of detecting the passage of a foreign body through the optical barrier can be found in the aforesaid Italian patent.

In order to generate two or more optical beams having extended geometry, and in order to receive two or more optical beams, it is possible to arrange for the bar of the optical source and/or the bar of the optical receiver to be provided with two or more diffusing strips placed at angles spaced apart from each other.

Further advantageous characteristics of the optical source, of the optical receiver and of the optical barrier which can be made from them are indicated in the attached dependent claims and are illustrated below with reference to examples of embodiment of the invention.

Brief description of the drawings

The invention will be more clearly understood from the description and the attached drawing, which shows a practical and non-restrictive embodiment of the invention. More particularly, in the drawing,

Fig. 1 shows a schematic longitudinal section of a bar of transparent material forming a light guide, with the indication of the optical paths of the beams emitted by the optical emitter;
Fig. 2 shows a schematic representation of the paths of the beams in an area of the surface which is made diffusing of the light guide of Fig. 1;
Fig. 3 shows a schematic enlargement of the diffusing area;
Fig. 4 shows a schematic perspective view of the paths of the beams in a light guide provided with a diffusing area along a longitudinal strip of its surface;
Fig. 4A shows a cross section of the bar of Fig. 4;
Fig. 5 shows a schematic cross section of a light guide provided with a diffusing and reflective opaque longitudinal lateral strip;
Fig. 6 shows a longitudinal section of a particular embodiment of the source bar;
Fig. 7 shows a cross section of a light guide comprising two diffusing and reflecting longitudinal lateral strips arranged at 90° to each other;
Fig. 8 shows a diagram of the arrangement of four light guides, with two acting as optical sources and two as optical receivers; and
Fig. 9 shows a schematic front view of a barrier produced with two light guides made according to the invention, provided with optical emitters and optical receivers at both ends.

Detailed description of an embodiment of the invention

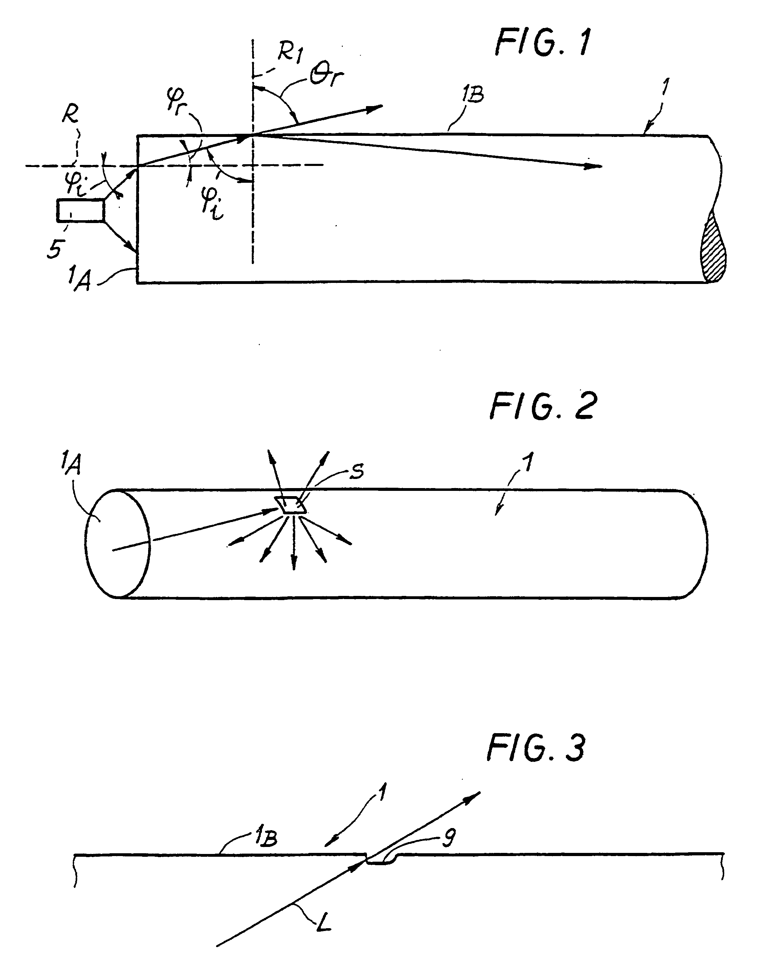

With reference to Figs. 1 to 4A, the principle of operation on which the present invention is based will be illustrated in the first place. Fig. 1 shows a longitudinal section, in a plane containing the axis, of a bar of material which is optically transparent to the wavelength of the optical emitter, which is used to generate the optical beam having an extended geometry.

In general, emitters in the visible or infrared range are preferably used for this application; however, the following considerations and the principle on which the invention is based also remain valid for other wavelengths of the electromagnetic radiation which is used. Therefore the term "light" or "light radiation" are to be understood in the generic sense and cover any wavelength of the electromagnetic radiation which can be guided in guide bars used as optical sources or as optical receivers.

In the illustrated example, the bar 1 has a circular section and a rectilinear development, although this is not a constraint, since it is sufficient for the bar to have an elongate development, a cross section which is not necessarily circular and, if required, a curvilinear axis.

1A indicates one of the two ends of the bar 1. An optical emitter 5, for example a light-emitting diode with a wide emission angle, faces the end 1A. If R is the perpendicular to the flat surface 1A of the end of the bar 1, then $\varphi i$ and $\varphi r$ indicate the angles of incidence and refraction for the outermost ray of the beam emitted by the emitter 5. If na and np are the refractive indices, respectively, of the air and of the material (for example Plexiglas®) from which the bar 1 is made, and if na = 1 and np > 1, the angle $\varphi r$ is smaller than the angle $\varphi i$.

Each ray emitted by the emitter 5 which penetrates by refraction through the surface 1A into the bar 1 strikes the lateral surface 1B of the bar with an angle of incidence, with respect to the perpendicular straight line R1, indicated by $\theta i$. Depending on the value of the angle of incidence and the refractive indices of the material from which the bar is made and of the air, the incident ray may theoretically be refracted outward or reflected inward with an angle $\theta r$ with respect to the perpendicular to the lateral surface 1B. The application of Snell's law indicates that all the rays emitted by the emitter 5 penetrate into the bar 1 through the end surface 1A and are all reflected by the lateral surface 1B toward the interior of the bar, so that they reach the end surface opposite the surface 1A.

This is because, by applying Snell's law, we find:

$$\frac{\sin \varphi_i}{\sin \varphi_r} = \frac{n_a}{n_p}$$

where $n_a = 1$ and $n_p$ are the refractive indices of the air and of the material of the bar, as specified above. The limit value $\theta_{iL}$ of the angle $\theta_i$ for which inward reflection takes place is found by letting $\theta r = 90°$, and therefore

$$\theta_{iL} = \arcsin \frac{1}{n_p}$$

For the rays striking the end surface 1A, Snell's law is written thus:

$$\frac{\sin\varphi_i}{\sin\varphi_r} = \frac{n_p}{n_a}$$

Given that

$$\varphi_r = 90° - \theta_i$$

and therefore

$$\varphi_{rL} = 90° - \theta_{iL}$$

we find

$$\sin\varphi_{rL} = \sin(90° - \theta_{iL}) = \cos\theta_{iL} = \sqrt{1 - (\sin\theta_{iL})^2}$$

and therefore, given that

$$\sin\theta_{iL} = \frac{1}{n_p}$$

we find

$$\sin\varphi_{rL} = \frac{1}{n_p} \sqrt{n_p^2 - 1}$$

and therefore

$$\sin\varphi_{iL} = \frac{1}{n_p} \sqrt{n_p^2 - 1} > 1$$

Consequently, all the rays striking the lateral entry wall 1A are propagated along the longitudinal development of the bar 1 by reflection from the lateral surface 1B, since they strike this surface at angles which are always greater than the limit value and therefore can never emerge from the bar.

Conversely, if a portion of the lateral surface 1B is made to be diffusing, extraction of the rays from this area is achieved. This can be done, for example, by grinding the outer lateral surface 1B of the bar 1. This causes the formation of micro-roughnesses on the surface which separates the material of the bar 1 from the air. Depending on the (random) orientation of the surface of the roughnesses and the angle of incidence of the individual ray on this surface, the ray may be reflected toward the interior of the bar 1, diffused toward the interior of the bar 1, or refracted toward the exterior. Fig. 2 shows schematically the behavior of the rays striking a portion S of the later surface 1B of the bar 1: some are reflected or diffused toward the interior of the bar, at angles which vary according to the orientation of the ground surface, and others emerge from the bar. Fig. 3 shows schematically at a high level of magnification the effect produced by the grinding on the surface 1B, which clarifies this behavior of the material: a scratch 9 made on the surface 1B modifies, in practice, the orientation of the interface surface between the material forming the bar 1 and the surrounding air, so that the light ray L indicated by way of example in Fig. 3 becomes orthogonal to the surface of the scratch 9 and passes through the surface of the scratch without deviation. Since the orientation of the surfaces of the roughnesses made by grinding is entirely random and variable, the rays striking the ground surface may be diffused, reflected or refracted to the exterior. There will, therefore, be an emergence of light rays from the guide 1 in the area which is made to be diffusing.

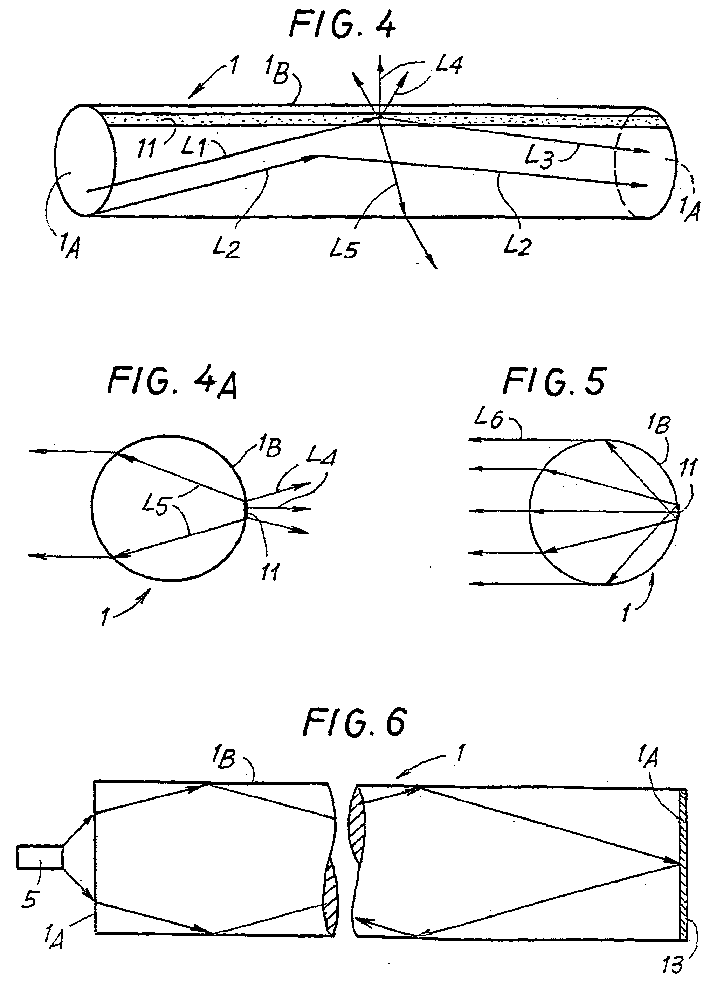

The invention is based on the idea of creating a beam having extended geometry, in practice a sheet of light, by making a narrow longitudinal strip of the bar 1 diffusing, as shown in Figs. 4 and 4A. Here, the diffusing strip is indicated by 11. It has a width which is very small with respect to the development of the lateral surface 1B of the bar 1. For example, with a bar 1 having a diameter of 2-2.5 cm, the longitudinal diffusing strip may have a width of 2-6 mm.

In this way the following result is obtained: the light rays emitted by the emitter 5 and penetrating into the bar 1 through the end surface 1A, two of which are indicated by L1 and L2 in Fig. 4, are divided into three categories:

- those (for example the ray L2) which are emitted by the emitter 5 and are reflected from the non-diffusing lateral surface 1B undergo total reflection (regardless of their angle of incidence, for the reason explained above), and reach the opposite end, again indicated by 1A, of the bar 1 by successive reflections, with an attenuation dependent on the transparency of the material;
- those emitted by the emitter 5 which strike the diffusing strip 11 and which are re-emitted with an angle of reflection greater than the limit value (ray L3) and which therefore continue their travel within the bar 1;
- those which strike the diffusing strip 11 and are re-emitted from this with an angle smaller than the limit value and which therefore, in some cases, undergo a refraction, emerging from the lateral surface 1B at the position of the strip 11 (refracted ray L4), and, in other cases, are diffused at an angle such that they subsequently strike the non-diffusing surface 1B at an angle smaller than the limit value and emerge from this surface (ray L5).

Thus, of all the rays which penetrate into the bar 1 through the end surface 1A, only a few emerge from the bar, predominantly along the diffusing strip 11, while most of them continue their travel up to the opposite end 1A. Along the diffusing strip there is generated a light beam which is substantially flat, or in any case has a shape corresponding to the development of the axis of the bar 1 which, as mentioned, can also be curved, the beam having a uniform intensity along the axial development of the bar 1. This bar therefore forms a linear light source. The light emerging from the side opposite the diffusing strip 11 (beams L5) is essentially not used, or may form a second beam having extended geometry, parallel to the beam emerging from the diffusing portion 11.

The considerations stated above for the bar 1 used as a linear light source are reciprocal, in that a second bar, similar to the bar 1, with a diffusing strip orientated toward the diffusing strip of the bar 1 collects the light of the beam generated by the diffusing strip 11 and guides the collected light by successive reflections toward the two ends of the bar according to identical optical laws. Thus the bar forms an optical receiver at whose ends it is possible to place two sensors, for example two photodiodes, which determine the intensity of the collected light signal.

By placing two bars of this type opposite each other, one being provided at one end at least with at least one light emitter and the other being provided at one end at least with a light sensor, a light beam having extended geometry is generated and can form a control barrier for a controlled volume. The passage of an opaque object through this beam having extended geometry causes a reduction of the optical signal received by the sensor or sensors placed at the ends of the receiving bar and can be used, for example, the emission of an alarm signal.

In an improved embodiment of the invention, in order to prevent the dispersion of light on the side opposite the area from which the beam having extended geometry is to emerge, the ground strip 11 is replaced with a strip of opaque white paint or other application of opaque material having a diffusing and reflective action. In this way the lateral extraction of the light rays takes place only on the side opposite the position of the diffusing and reflective strip. This situation is shown in Fig. 5, which illustrates a cross section of a bar 1 which again is of circular section. The diffusing strip is again indicated by 11. It diffuses the incident rays at angles such that they strike the portion opposite the lateral surface 1B of the bar 1 at an angle smaller than the limit value, and emerge from the bar, as indicated at L6.

In practice, a beam having extended geometry, which has a length equal to the axial length of the bar 1 and a thickness equal to the diameter of the bar, is generated in this way. The particular circular section provides a further fundamental advantage in this case: the rays L6 emerging from the lateral surface 1B of the bar 1 undergo a refraction in passing through the separating surface 1B between the bar from the air. The refraction causes focusing with a tendency to parallelism of the rays which are propagated in air. Thus a beam having extended geometry, which has an approximately constant thickness along the path between the source bar and the receiving bar, is obtained. By suitably shaping the profile of the directrix of the cylinder (or other surface, which may have a curved axis) forming the bar, it is possible to impart any shape to the beam emerging from the bar 1, including a shape with a thickness smaller than the diameter of the bar 1.

In a reciprocal way, the refraction undergone by the rays entering the opposite bar, which acts as the receiving bar, produces an effect of concentration in the proximity of the diffusing strip. This strip in turn generates beams which are propagated toward the terminal sections by successive total reflections. Here they are collected by one or more optical sensors applied to one or both end surfaces.

If a single emitter 5 is applied to the source bar, or a group of emitters 5 is applied to only one of the end surfaces 1A, and if a reflective surface is placed on the opposite end surface, the rays which reach the opposite end surface from the emitter will undergo reflection, which doubles the lateral extraction effect, and there will be some rays which are also reflected from the end face where the emitting source is placed, and for these there will be another reflection, and so forth.

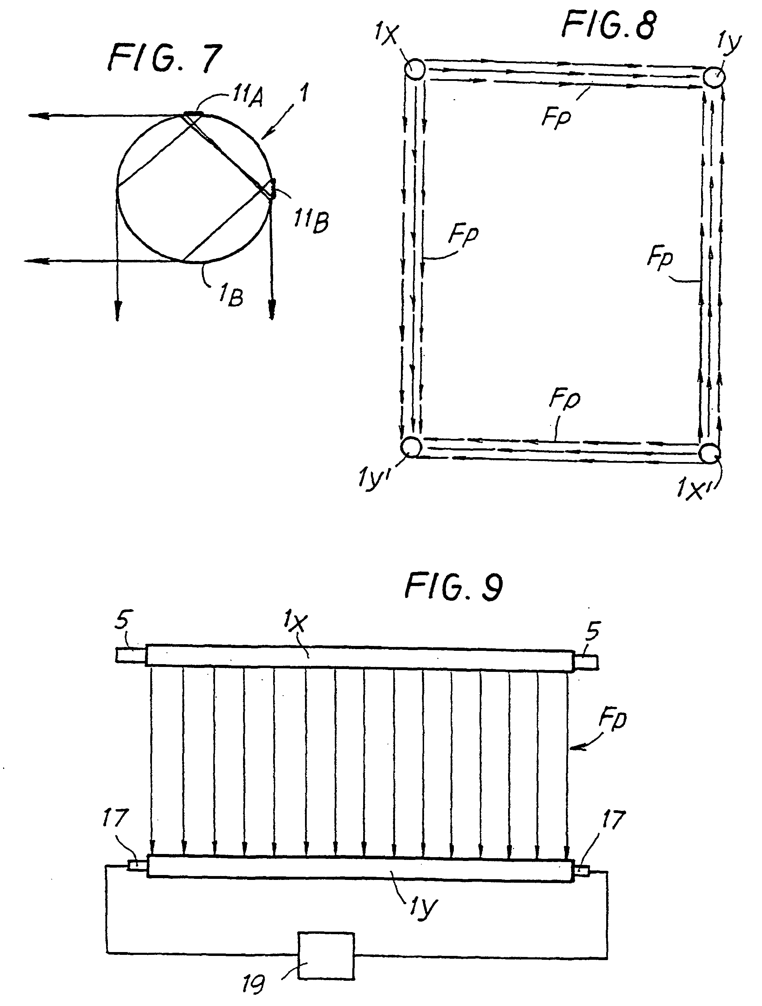

This situation is shown schematically in Fig. 6, where the number 13 indicates a reflective strip applied to the surface 1A of the bar 1 opposite the surface 1A in front of which the emitter 5 is placed. In a reciprocal way, a similar configuration may also be provided in the receiving bar, with a light sensor associated with one of the end surfaces and a reflective strip at the opposite end surface.

If the diffusing strip 11 is made in a number of portions spaced apart along the directrix of the curved surface forming the lateral surface 1B of the bar 1, for example in two positions spaced apart by 90° as shown in the cross section in Fig. 7 and indicated there by 11A and 11B, for both the source bar and the receiving bar, it is possible to form a plurality of beams having extended geometries, emerging from the source bar at two angles separated each other in a way corresponding to the angular separation of the two diffusing and reflective strips 11A, 11B. Using two pairs of bars of this type, where each pair has a source bar and a receiving bar, it is possible to define controlled volumes of rectangular section, as shown in Fig. 8: here, two bars 1x and 1x' are used as light sources, each of which emits two beams with planar geometry Fp, which are received by two receiving bars 1y and 1y'. In this way it is possible to generate an alarm signal or at least to signal the passage of an object from the interior to the exterior of the controlled volume and vice versa.

The described optical bar elements can also be used to form different configurations, owing to the fact that the bars do not necessarily have to have the shape of a cylinder (of any section), but can also consist of closed surfaces developed along a curvilinear axis. For example, a cylindrical volume can be controlled by means of two transmitting and receiving bars, having an open toroidal development (such that at least the two end surfaces 1A can be formed).

Fig. 9 shows a different configuration, in which a barrier having a vertical planar development is generated by means of an upper source bar 1x and a lower receiving bar 1y which are parallel to each other. Fp indicates the planar beam generated by the upper bar and captured by the lower bar. This diagram also indicates two emitters or a set of emitters 5 associated with the two ends of the source bar 1x and two light sensors 17 associated with the ends of the lower receiving bar 1y, connected to an electronic control circuit 19, which can be similar to that described previously in Italian patent No. 1,291,835.

With a configuration of this type, but having vertical bars, a linear barrier was formed with a source bar 1 m long and a receiving bar of the same length, located 6 m apart from each other. The transmitting bar was made with a Plexiglas® cylinder of circular section, having a diameter of 25 mm. Seven infrared emitters with a wide emission angle (SFH485P, made by Siemens of Germany) were placed at each of the two ends, and a square-wave current with an amplitude of 180 mA and a frequency of 1 kHz was passed through them. The width of the diffusing and reflective strip 11 formed with opaque white synthetic paint was 5 mm.

The receiving bar was made from a Plexiglas® cylinder having a diameter of 20 mm, with a diffusing strip 4 mm in width, formed by means of the same opaque white paint. One sensor, consisting of a photodiode with integrated amplifier, type TSL260, made by Texas Instruments of the USA, was placed at each of the two ends.

Using the barrier formed in this way, it was possible to reliably detect the intrusion through it of a round bar 8 mm in diameter at any point of the area enclosed by the two parallel bars, anywhere within the distance of 6 m between them.

As the distance between the source and receiving bars is increased, the sensitivity decreases. With the configuration described above, but a distance of 12 m between the bars, it was possible to reliably detect the intrusion of a round bar 25 mm in diameter at any point of the area enclosed between the bars.

By increasing or decreasing the power of the infrared emitters, it is possible to obtain a higher or lower sensitivity, and the minimum diameter of the detectable object is also varied.

The thickness of the beam, with the bars spaced at 6 m, is approximately 3.5 cm measured at the mid-point of the barrier.

The alignment of the two bars and their parallelism are not critical parameters, and therefore installation is particularly simple. Furthermore, the use of emitter and receiver components placed only at the ends of the bars makes the device more economical (smaller number of components) and easier to assemble and install than conventional systems.

Particular reference was made in the above description to the use of the optical sources and receivers according to the present invention for making anti-intrusion barriers. In reality, however, this is only one of the possible applications of the optical sources and/or receivers made according to the principle on which the invention is based.

This is because, for example, the optical source can also be used independently of the optical receiver, in which case it can be used as a lighting element to meet specific lighting requirements, or even simply furnishing and design requirements.

The optical barrier using an optical source and an optical receiver according to the invention (or if necessary, but less advantageously, a receiver of another type having a linear development, for example one made according to IT-B-1,291,835), can be used not only as an anti-intrusion barrier, but also as a transducer device for the measurement of sizes and/or shapes of three-dimensional objects.

This is because, as is clear from the preceding description, the optical signal collected by the sensor or sensors associated with the optical receiver is proportional to the shadow projected by the object which is introduced into the beam having extended geometry generated by the source and captured by the receiver. This shadow depends on the shape and size of the object. This property can be used for making measurements of size and shape. In the simplest case, an optical source and receiver positioned with vertical axes can be used to measure the height of an opaque object which passes between them. The reduction of the optical signal received by the receiver is directly proportional to the height of the object. Additionally, if the object moves between the source and the receiver approximately orthogonally to the plane of the extended beam, if the speed of advance of the object is known and the time elapsing between the start and the end of the signal of the intrusion of the object into the optical beam is measured, it is possible to determine the dimension in the direction orthogonal to the axial development of the source and the receiver. With a second source-receiver pair positioned with horizontal axes, it is possible to measure the third dimension of the object. If the latter is an object of parallelepipedal shape correctly oriented with respect to the direction of advance, a complete measurement of all its dimensions can be made in this way.

With more complex arrangements, using a plurality of source-receiver pairs if required, provided with suitable movements relative to the object to be measured, it is possible to make more complex measurements, still based on the variation of the light signal captured by the receiver, on the basis of which the dimensions of the object in various directions and/or its shape can be determined, when the measurements are made, for example, by "slicing" the object at different heights by means of the same extended beam which moves with respect to the object. A single optical barrier can be provided with a plurality of relative movements with respect to the object to be measured, for example a rotary movement about an axis orthogonal to the plane of the beam generated by the source and a traversing movement parallel to the axis of rotation.

Thus the optical barrier according to the invention can be used in various industrial applications, for example to control the correct execution of production cycles, to provide enabling signals for particular operations as a function of a signal supplied by one or more optical barriers, to set parameters of a production cycle or of an operation as a function of the measurements made by the optical barrier, to sort objects as a function of their dimensions monitored by means of optical barriers, and so forth.

It is to be understood that the drawing shows only practical embodiments of the invention, which can be varied in its forms and arrangements, without departure from the scope of the principle on which the invention is based. Any reference numbers in the attached claims have the purpose of facilitating the reading of the claims with reference to the preceding text and the attached drawings, and do not limit the scope of their protection.

**Claims**

1. An extended optical receiver, comprising an elongate bar (1) with one lateral surface (1B) and two end surfaces (1A); at least one optical sensor (17) placed in front of at least one of said end surfaces (1A), in such a way as to receive an optical beam guided along said bar (1) toward said end surface, said bar being made from a material optically transparent at the reception wavelength of said optical sensor (17); and at least one diffusing strip (11) along the longitudinal development of said bar, on the lateral surface (1B) thereof.

2. The optical receiver as claimed in claim 1, in which said bar has a constant cross section.

3. The optical receiver as claimed in claim 2, in which said bar is cylindrical.

4. The optical receiver as claimed in claim 2 or 3, in which said bar has a circular cross section.

5. The optical receiver as claimed in one or more of claims 1 to 4, in which said diffusing strip consists of a ground area of the lateral surface (1B) of said bar.

6. The optical receiver as claimed in one or more of claims 1 to 4, in which said diffusing strip consists of a strip of diffusing and reflective material (11) which is opaque to the radiation detected by the optical sensor.

7. The optical receiver as claimed in claim 6, in which said diffusing and reflective material is an opaque white paint.

8. The optical receiver as claimed in one or more of claims 1 to 7, comprising at least one optical sensor (17) in front of each of said end surfaces (1A).

9. The optical receiver as claimed in one or more of claims 1 to 7, in which said at least one optical sensor (17) is placed in front of one of said end surfaces and a reflective surface is applied in front of the opposite end surface.

10. The optical receiver as claimed in one or more of claims 1 to 9, comprising at least two diffusing strips (11) arranged so that they are angularly spaced apart along the lateral surface (1B) of said bar.

11. An extended optical anti-intrusion barrier, comprising, in combination, an extended optical source (1x) and an extended optical receiver (1y), with which is associated at least one optical sensor (17) placed at one end of said optical receiver (14), and a control circuit (19) associated with said at least one optical sensor to detect a reduction of the optical signal collected by said at least one sensor, **characterized in that**

- said extended optical source (1x) comprises: an elongate bar (1) with one lateral surface (1B) and two end surfaces (1A); at least one optical emitter (5) placed in front of at least one of said end surfaces (1A), in such a way as to emit an optical beam toward said end surface, said bar being made from a material optically transparent at the emission wavelength of said optical emitter (5); and at least one diffusing strip (11) along the longitudinal development of said bar, on the lateral surface (1B) thereof; and
- said optical receiver (1y) is made according to one or more of claims 1 to 10.

**Patentansprüche**

1. Verlängerter optischer Empfänger, welcher umfasst:

   einen länglichen Stab (1) mit einer Seitenfläche (1B) und zwei Endflächen (1A); mindestens einen optischen Sensor (17), welcher vor mindestens einer der Endflächen (1A) derart angeordnet ist, dass er einen optischen Strahl, welcher längs des Stabs (1) in Richtung auf die Endfläche geführt wird, empfängt, wobei der Stab aus einem Material gefertigt ist, welches bei der Empfangswellenlänge des optischen Sensors (17) optisch durchlässig ist; und mindestens einen streuenden Streifen (11) längs der Längserstreckung des Stabs auf dessen Seitenfläche (1B).

2. Optischer Empfänger gemäß Anspruch 1, bei welchem der Stab einen konstanten Querschnitt aufweist.

3. Optischer Empfänger gemäß Anspruch 2, bei welchem der Stab zylindrisch ist.

4. Optischer Empfänger gemäß Anspruch 2 oder 3, bei welchem der Stab einen kreisförmigen Querschnitt hat.

5. Optischer Empfänger gemäß einem oder mehreren der Ansprüche 1 bis 4, bei welchem der streuende Streifen aus einem geschliffenen Bereich der Seitenfläche (1B) des Stabs besteht.

6. Optischer Empfänger gemäß einem oder mehreren der Ansprüche 1 bis 4, bei welchem der streuende Streifen aus einem Streifen eines streuenden und reflektierenden Materials (11) besteht, welches für die vom optischen Sensor erfasste Strahlung undurchlässig ist.

7. Optischer Empfänger gemäß Anspruch 6, bei welchem das streuende und reflektierende Material eine undurchlässige weiße Farbe ist.

8. Optischer Empfänger gemäß einem oder mehreren der Ansprüche 1 bis 7, welcher mindestens einen optischen Sensor (17) vor jeder der Endflächen (1A) umfasst.

9. Optischer Empfänger gemäß einem oder mehreren der Ansprüche 1 bis 7, bei welchem der mindestens eine optische Sensor (17) vor einer der Endflächen angeordnet ist und eine reflektierende Fläche vor der gegenüber liegenden Endfläche angebracht ist.

10. Optischer Empfänger gemäß einem oder mehreren der Ansprüche 1 bis 9, welcher mindestens zwei streuende Streifen (11) umfasst, welche derart angeordnet sind, dass sie längs der Seitenfläche (1B) des Stabs winklig voneinander beabstandet sind.

11. Verlängerte optische Eindringschutz-Barriere, welche in Kombination umfasst: eine verlängerte optische Quelle (1x) und einen verlängerten optischen Empfänger (1y), mit dem mindestens ein optischer Sensor (17) verbunden ist, der sich an einem Ende des optischen Empfängers (14) befindet, und einen Steuerkreis (19), welcher mit dem mindestens einen optischen Sensor verbunden ist, um eine Verminderung des optischen Signals festzustellen, das von dem mindestens einen Sensor aufgenommen wird, **dadurch gekennzeichnet, dass**

- die verlängerte optische Quelle (1x) umfasst: einen länglichen Stab (1) mit einer Seitenfläche (1B) und zwei Endflächen (1A); mindestens einen optischen Emitter (5), welcher vor mindestens einer der Endflächen (1A) derart angebracht ist, dass er einen optischen Strahl in Richtung auf die Endfläche aussendet, wobei der Stab aus einem Material gefertigt ist, welches bei der Emissionswellenlänge des optischen Emitters (5) optisch durchlässig ist; und mindestens einen streuenden Streifen (11) längs der Längserstreckung des Stabs auf dessen Seitenfläche (1B); und

- der optische Empfänger (1y) gemäß einem oder mehreren der Ansprüche 1 bis 10 gefertigt ist.

**Revendications**

**1.** Récepteur optique étendu, comprenant une barre allongée (1) avec une surface latérale (1B) et deux surfaces d'extrémité (1A) ; au moins un capteur optique (17) placé devant au moins l'une desdites surfaces d'extrémité (1A), de façon à recevoir un faisceau optique guidé le long de ladite barre (1) en direction de ladite surface d'extrémité, ladite barre étant réalisée à partir d'un matériau optiquement transparent à la longueur d'onde de réception dudit capteur optique (17) ; et au moins une bande de diffusion (11) le long du développement longitudinal de ladite barre, sur la surface latérale (1B) de celle-ci.

**2.** Récepteur optique selon la revendication 1, dans lequel ladite barre comporte une section transversale constante.

**3.** Récepteur optique selon la revendication 2, dans lequel ladite barre est cylindrique.

**4.** Récepteur optique selon la revendication 2 ou 3, dans lequel ladite barre comporte une section transversale circulaire.

**5.** Récepteur optique selon l'une ou plusieurs des revendications 1 à 4, dans lequel ladite bande de diffusion consiste en une zone de masse de la surface latérale (1B) de ladite barre.

**6.** Récepteur optique selon l'une ou plusieurs des revendications 1 à 4, dans lequel ladite bande de diffusion consiste en une bande de matériau de réflexion et de diffusion (11) qui est opaque à la radiation détectée par le capteur optique.

**7.** Récepteur optique selon la revendication 6, dans lequel ledit matériau de réflexion et de diffusion est une peinture blanche opaque.

**8.** Récepteur optique selon l'une ou plusieurs des revendications 1 à 7, comprenant au moins un capteur optique (17) devant chacune desdites surfaces d'extrémité (1A).

**9.** Récepteur optique selon l'une ou plusieurs des revendications 1 à 7, lequel ledit au moins capteur optique (17 est placé devant l'une desdites surfaces d'extrémité et une surface de réflexion est appliquée devant la surface d'extrémité opposée.

**10.** Récepteur optique selon l'une ou plusieurs des revendications 1 à 9, comprenant au moins deux bandes de diffusion (11) disposées de telle sorte qu'elles sont espacées angulairement entre elles le long de la surface latérale (1B) de ladite barre.

**11.** Barrière anti-intrusion optique étendue, comprenant, en combinaison, une source optique étendue (1x) et un récepteur optique étendu (1y), avec lequel est associé au moins un capteur optique (17) placé à une extrémité dudit récepteur optique (14), et un circuit de commande (19) associé avec ledit au moins capteur optique pour détecter une réduction du signal optique collecté par ledit au moins un capteur, **caractérisé en ce que**

- ladite source optique étendue (1x) comprend : une barre allongée (1) avec une surface latérale (1B) et deux surfaces d'extrémité (1A) ; au moins un émetteur optique (5) placé devant au moins une desdites surfaces d'extrémité (1A), de façon à émettre un faisceau optique en direction de ladite surface d'extrémité, ladite barre étant réalisée à partir d'un matériau optiquement transparent à la longueur d'onde d'émission dudit émetteur optique (5) ; et au moins une bande de diffusion (11) le long du développement longitudinal de ladite barre, sur la surface latérale (1B) de celle-ci ; et
- ledit récepteur optique (1y) est réalisé selon une ou plusieurs des revendications 1 à 10.

EP 1 185 822 B1

FIG. 1

FIG. 2

FIG. 3

# FIG. 4

# FIG. 4A

# FIG.5

# FIG.6

FIG. 7

FIG.8

FIG. 9